# EUROPEAN PATENT APPLICATION

(11) **EP 3 379 508 A1**
(43) Date of publication of application: **26.09.2018**
(21) Application number: 18162240.8
(22) Date of filing: 16.03.2018
(51) Int. Cl.: G08B 13/196

(54) **SYSTEM AND METHOD FOR ENABLING DYNAMIC PRIVACY ZONES IN THE FIELD OF VIEW OF A SECURITY CAMERA BASED ON MOTION DETECTION**

(30) Priority: 21.03.2017 US 201715465260
(71) Applicant: Honeywell International Inc., Morris Plains, NJ 07950 (US)
(72) Inventor: MEGANATHAN, Deepak Sundar, Morris Plains, NJ 07950 (US)
(74) Representative: Houghton, Mark Phillip

(57) **Abstract**

Systems and methods for enabling dynamic privacy zones in a field of view of a security camera based on motion detection are provided. Some methods can include a security camera (200) having a field of view monitoring a region, the security camera detecting a first predetermined gesture (210) made by a user (U) within the field of view of the security camera, and, responsive thereto, enabling a dynamic privacy zone within the field of view of the security camera for a predetermined period of time.

## Description

### FIELD

The present invention relates generally to security systems. More particularly, the present invention relates to systems and methods for enabling dynamic privacy zones in a field of view of a security camera based on motion detection.

### BACKGROUND

Known security systems and connected home systems include security cameras that monitor areas of a building or home, such as a living room, backyard, front door, window, basement, child's room, and the like. However, home owners may have privacy concerns and not be comfortable with a camera recording them at all times. For example, home owners may prefer times when a security camera does not record their actions.

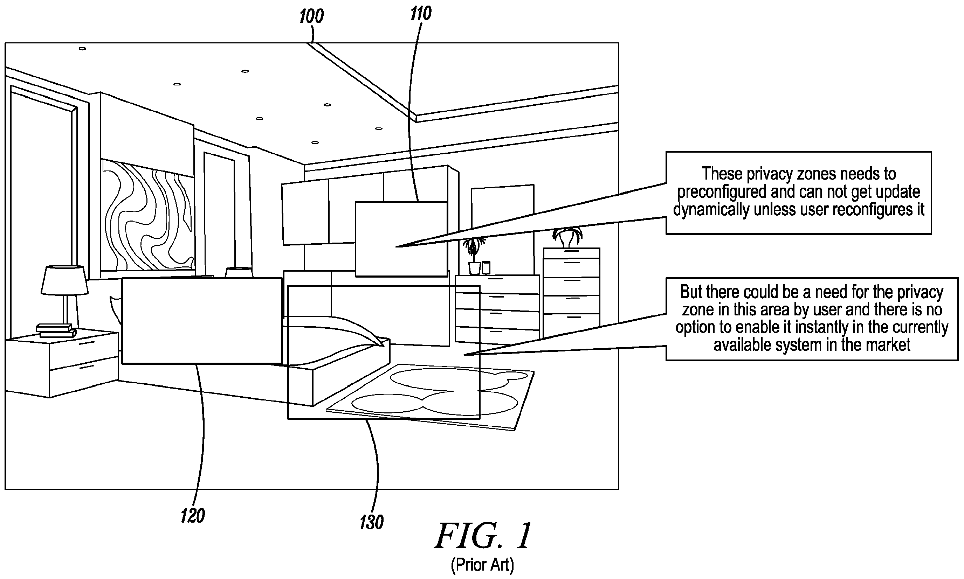

Some known systems address home owners' privacy concerns by allowing the home owner to preconfigure a privacy zone in the field of view of a camera. However, it is difficult to judge when and where a privacy zone is needed. For example, a home owner may need momentary privacy in an area of a room that has not been preconfigured as a privacy zone, but known systems do not allow the home owner to immediately and instantly enable such privacy without the use of a mobile device to reconfigure a privacy zone or to configure a new privacy zone. For example, as seen in in the field of view 100 of a security camera shown in FIG. 1, privacy zones 110 and 120 could be preconfigured by a home owner. However, a need could arise for privacy within the zone 130, which is not a preconfigured privacy zone, and known systems and methods do not allow the homeowner to instantly enable privacy in the zone 130.

Of course, the home owner could simply power off a camera to obtain privacy, but such actions risk the home owner forgetting to power the camera back on to continue home monitoring when the need for privacy has expired.

In view of the above, there is a continuing, ongoing need for improved systems and methods.

The present invention in its various aspects is as set out in the appended claims.

### BRIEF DESCRIPTION OF THE DRAWINGS

FIG. 1 is a field of view of a security camera with preconfigured privacy zones as known in the art;
FIG. 2 is a view of a security camera monitoring a region and a user in the region showing a predetermined gesture towards the camera to enable a dynamic privacy zone in accordance with disclosed embodiments;
FIG. 3 is a view of dynamic privacy zones in a field of view of a security camera monitoring a region in accordance with disclosed embodiments; and
FIG. 4 is a view of a dynamic privacy zone in a field of view of a security camera monitoring a region in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for enabling dynamic privacy zones in a field of view of a security camera based on motion detection.

A dynamic privacy zone within the field of view of the security camera has the following meanings:
That the zone is dynamic means that it changes with time. The change with time may be that the zone lasts for a predetermined time from its inception, such as a time determined by a user input, such as a hand gesture.

The change with time may be due to the zone adapting its scope to include all areas of an image in which movement takes place, such as determined by values of image pixels changing by a predetermine amount in, for example, one or more of color and intensity. This form of dynamism is preferably combined with the time limited form described above, this provides provides dynamic privacy as the region of an image which is affected adapts itself according to change (such as movement of a person around aroom). The additional area of an image included in the dynamic privacy zone is preferably cumulative, so that an area 'excluded' from recording due movement remains excluded whilst the dynamic privacy zone remains. This is advantageous as before its inception the dynamic privacy zone is likely not required so only changes after its inception need to be excluded from recording (in the sense described in the next paragraph). More preferred is that the privacy zone is extended to the image for a predetermined time, such as from 1 to 5 seconds before the dynamic privacy zone is invoked, this is because the need for privacy may not necessarily be premeditated, as if it is then the user could simply move to a non-monitored area. To this end the image feed of the security camera is preferably buffered for the predetermined time before output, such as to a system of which it is part). Buffering may be from 1 to 5 seconds, to allow for that retrospective application of the dynamic privacy zone. The user input commands may include commands to specify if time, movement or time and movement are to be the parameters that define the dynamism.

That there is a privacy zone means that in an image or series of images from a security camera a predetermined region of that image is modified (by a privacy mask) so that the image in that region is not visible using image processing for which the rest of the image is visualisable. Not visible, means that either a) no image is present, such as a solid block of a colour or b) that what is visualisable using image processing for which the rest of the image is visualisable bears no readily identifiable, such as by a human user, image. For example, the region may appear as 'noise', it being an image (as in a pattern of light) but not recognizably so of any object in the field of view. This latter image modification region is preferred. Specifically b) can be an image region in which the image information is scrambled using a randomised process such that no image recovery in that region is possible. However, b) is preferably an image region in which the image information is (further) encoded, such as by encryption, such that using image processing for which the rest of the image is visualisable bears (as in provides) no readily identifiable, such as by a human user, image. This enables privacy to be achieved but means to recover the information such as by a person with suitable authority or other equipment capable of de-encryption are available using additional equipment not part of a security system of which the security camera is part.
Both a) and b) allow conventional equipment to record the composite image with it sub-image of the dynamic privacy zone using the image processing for which the rest of the image is visualisable. Illustrative examples of image processing are video coding formats including H.264, HEVC, VP8 or VP9. Similarly, suitable encoded audio and video streams are MP4, FLV, WebM, ASF or ISMA. The further encoding may simply be another image or video coding format than used for the overall image. By example, the image may be recorded as MP4 but the privacy zone region may be encoded as FLV, this is advantageous as it allows conventional image processing equipment to be used, preferably with a supervising processor in the system to determine which image parts are to be processed by which encoding. The predetermined region of that image is therefore preferably tagged with a start and end encoding to trigger the swap between encoding by the supervising processor.

That the zone privacy zone indicates that recordings form the zone of the field of view of the security camera are not desired to be recorded by a user, or at least not desired to be readily viewed, preferably without the use of additional equipment not part of a security system of which the security camera is part. Such additional equipment may be a part of a wider security system of which the security camera is a first part and the additional equipment is a de-encryption device not directly connected to the camera.

That the zone is within the field of view of the security camera means that an image or series of images from a security camera defines a field of view at any given time, the actual region of space being recorded is not the field of view other than at any given time the field of view of the camera will record such a region of space.

The zone is a sub set of the image data in the field of view. The sub set may be predefined in terms of area, such as a rectangle, and/or may be predefined in term of dynamic factors, such as described above in terms of change in image parameters (for example intensity and colour).

For example, systems and methods disclosed herein can facilitate a user enabling a dynamic privacy zone in the field of view of a security camera on an as needed basis. In some embodiments, systems and methods disclosed herein can enable a dynamic privacy zone responsive to identifying a predetermined gesture or action of the user in the field of view of the camera, and in some embodiments, systems and methods can identify and move enabled privacy zones based on motion or activity detected within the field of view of a camera.

In accordance with disclosed embodiments, in the present invention, such as after a security camera is installed into a region as part of a security system, a user identifies a need for privacy in the region in which the camera is installed.For example the user can show a predetermined hand gesture, such as holding up a predetermined number of fingers or holding up the user's hand in any predetermined and recognizable manner, towards the camera. A predetermined gesture is recorded by a security camera to the extent necessary to be identified. Systems and methods disclosed herein, for example, the camera, can use motion detection processing to identify the gesture, and such identification can trigger systems and methods disclosed herein, for example, the camera, enabling a dynamic privacy zone within the field of view of the camera, for example, by placing a privacy mask within the field of view of the camera.

In some embodiments, different gestures can be configured to trigger different actions or to trigger enabling a dynamic privacy zone for different time intervals. For example, in embodiments in which the predetermined gesture includes holding up a predetermined number of fingers towards the camera, the number of fingers can determine the length of time that the privacy zone is enabled. A gesture that includes a single finger can trigger a privacy zone for 5 minutes, a gesture that includes double fingers can trigger a privacy zone for 10 minute, and so on. In some embodiments, yet another gesture, such as a thumbs down hand gesture, can trigger disabling the dynamic privacy zone. Additionally or alternatively, after expiration of the triggered time interval, systems and methods disclosed herein can automatically disable the privacy zone without further user input.

In some embodiments, instead of or in addition to a physical gesture, systems and methods disclosed herein can detect a predetermined voice command from a user or can detect voice biometric information in a voice command from a user, and such detection can trigger systems and methods disclosed herein enabling a dynamic privacy zone within the field of view of a camera as disclosed and described herein. In some embodiments, instead of or in addition to a physical gesture or a voice command, systems and methods disclosed herein can detect a manual user input, such as a button on a camera, a mobile device, or a keypad being touched or depressed, and such detection can trigger systems and methods disclosed herein enabling a dynamic privacy zone within a field of view of the camera as disclosed and described herein.

In some embodiments, systems and methods disclosed herein can enable a dynamic privacy zone responsive to detecting a physical gesture, voice command, or physical user input of only a predetermined user or a predetermined type of user. For example, systems and methods disclosed herein can enable a dynamic privacy zone responsive to detecting a physical gesture of an adult user, but can refrain from enabling a dynamic privacy zone responsive to detecting the same physical gesture made by a child user. In some embodiments, systems and methods disclosed herein can use face recognition processing to determine whether a detected user is the predetermined user, the predetermined type of user, or any other authorized user. In some embodiments, systems and methods disclosed herein can use voice recognition processing to determine whether a detected voice command that includes a predetermined password was said by the predetermined user, the predetermined type of user, or any other authorized user.

In any embodiment, it is to be understood that the gestures to trigger the enablement of a dynamic privacy zone as disclosed herein can be simple enough that a security camera itself can detect the gesture and execute processing to enable a dynamic privacy zone responsive thereto. Accordingly, systems and methods disclosed herein can be executed even when a camera is not connected to a central monitoring station or control panel via a network. Indeed, systems and methods disclosed herein can be implemented with a standalone security camera.

It is to be understood that, when the security camera or a network connected thereto is accessed or hacked by an unauthorized user, in some embodiments, a video data stream from the security camera can include privacy masks therein in accordance with enabled privacy zones. Nevertheless, in some embodiments, an authorized user can remove a privacy mask from the video data stream using encryption or decryption processing.

In some embodiments, systems and methods disclosed herein can initially enable a dynamic privacy zone in the center of a field of view of a camera. However, systems and methods disclosed herein can continually adjust and resize the privacy zone responsive to motion or activity detected within the field of view of the camera. For example, when systems and methods detect motion or activity outside of the center of the field of view of the camera, systems and methods disclosed herein can move or resize the dynamic privacy zone to cover a first portion of the field of view of the camera in which the motion or activity is detected, which may be wholly or partially outside of the center of the field of view of the camera. Then, when systems and methods detect motion or activity outside of the first portion of the field of view of the camera, systems and methods disclosed herein can move or resize the dynamic privacy zone to a second portion of the field of view of the camera in which the motion or activity is detected, which may be wholly or partially outside of the first portion of the field of view of the camera. In this manner, users can ensure that intended areas are covered with a privacy mask as needed.

As explained above, after expiration of a predetermined time interval associated with the gesture detected by the security camera, systems and methods disclosed herein can automatically disable the privacy zone. However, in some embodiments, when systems and methods fail to detect motion within the same field of view or room in which the privacy zone is enabled prior to expiration of the predetermined time interval, systems and methods disclosed herein can automatically disable the privacy zone prior to the expiration of the predetermined time interval. Furthermore, in some embodiments, when systems and methods detect motion after the predetermined time interval and within the same field of view or room in which the privacy zone was disabled, systems and methods disclosed herein can automatically extend the time interval and, thus, the privacy zone being enabled until systems and methods disclosed herein no longer detect motion or a predetermined person or object within the field of view or room in which the privacy zone is enabled.

In some embodiments, a security camera as disclosed herein can include a visual indicator, such as an LED, to indicate to a user when a dynamic privacy zone within the field of view of the camera is enabled. For example, in some embodiments, the LED can display a first color when no dynamic privacy zones within the field of view of the camera are enabled, and the LED can display a second, different color when a dynamic privacy zone within the field of view of the camera is enabled.

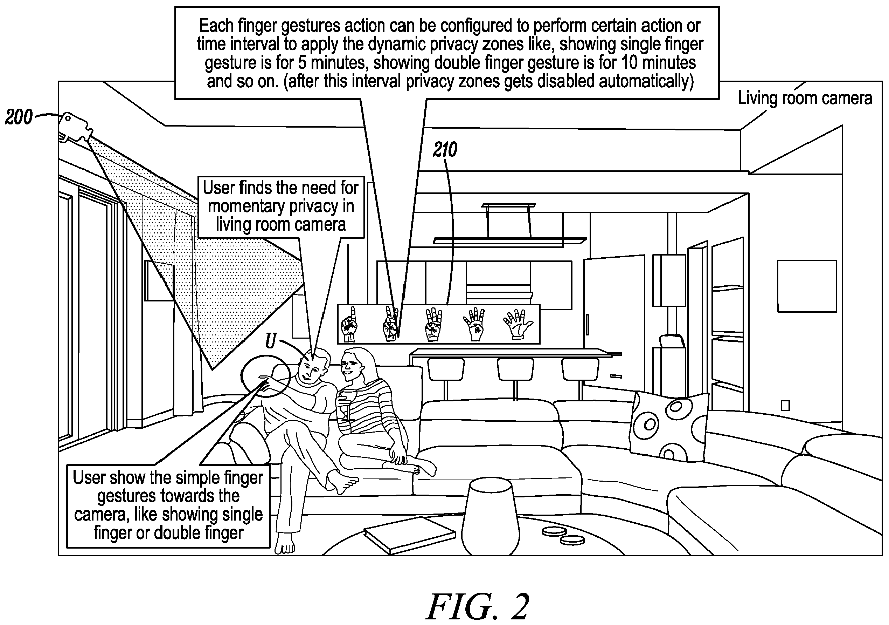

FIG. 2 is a view of a security camera 200 monitoring a region, for example, a living room in a home. When a user U identifies a need for momentary privacy within the region, the user U can show a predetermined gesture towards the camera 200 to trigger enabling a privacy zone. For example, different gestures, including the gestures shown in box 210, can be configured to trigger different actions or to trigger enabling a dynamic privacy zone for different time intervals.

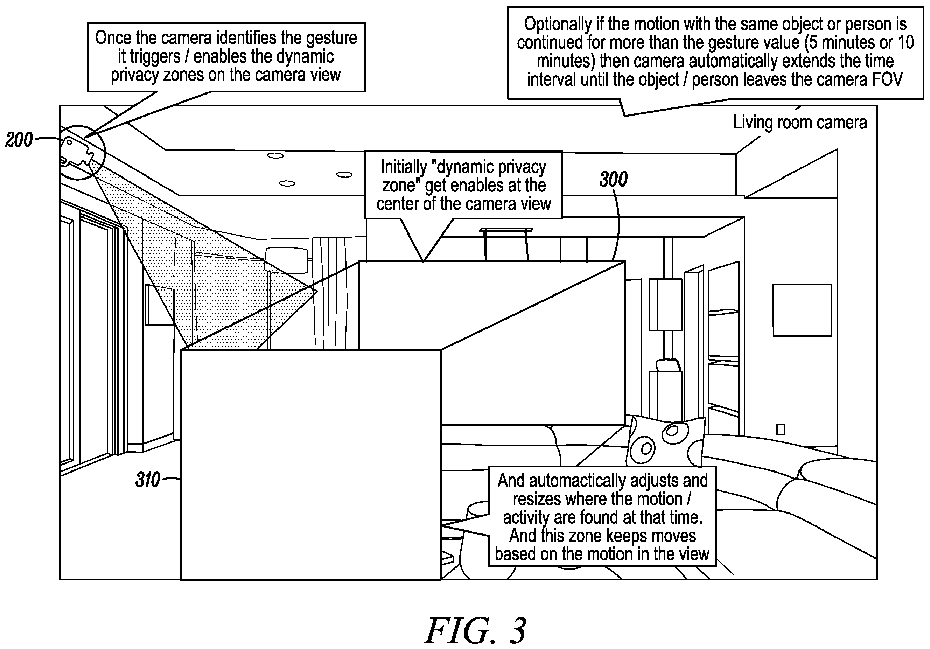

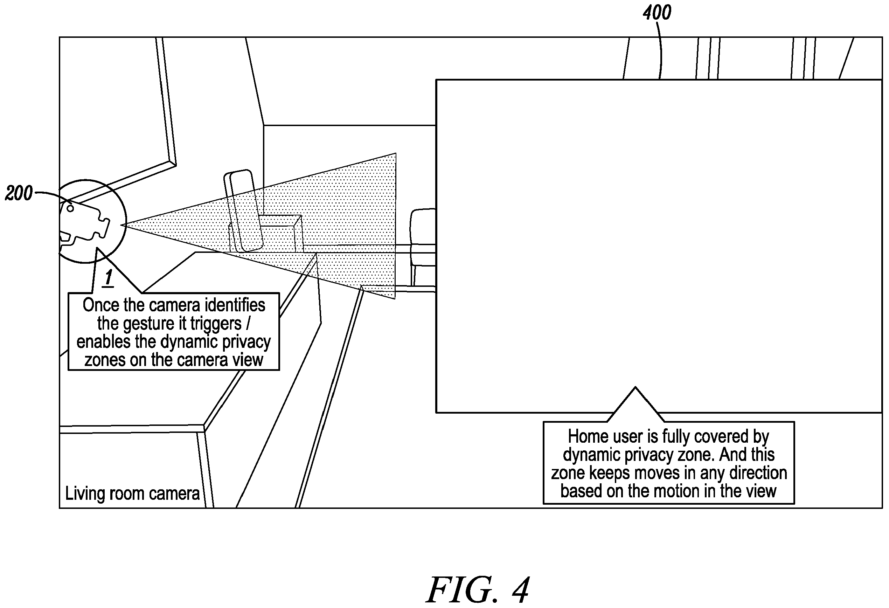

FIG. 3 and FIG. 4 are views of dynamic privacy zones in a field of view of the camera 200 monitoring the region. Responsive to the camera 200 identifying a gesture of the user U, the camera 200 or a central monitoring station or control panel connected thereto, can enable a dynamic privacy zone in the field of view of the camera.

For example, as seen in FIG. 3, in some embodiments, an initial privacy zone 300 can be enabled in the center of the field of view of the camera. However, when the camera 200 or the central monitoring station or control panel connected thereto detects motion or activity with the field of view of the camera outside of the initial privacy zone 300, the camera 200 or the central monitoring station or control panel connected thereto can automatically adjust or resize the initial privacy zone 300 to a new privacy zone 310. The camera 200 or the central monitoring station or control panel connected thereto can continually adjust or resize the privacy zone in the field of view of the camera based on detected motion or activity, and, when motion of the same user U that triggered the privacy zone is detected after the privacy zone is disabled and within the field of view of the camera, the camera 200 or the central monitoring station or control panel connected thereto can automatically extend the privacy zone being enabled until the same user U is no longer detected within the field of view of the camera 200.

As seen in FIG. 4, in some embodiments, a privacy zone 400 can be enabled in the field of view of the camera to cover the entirety of the user U. However, as above, responsive to the camera 200 or the central monitoring station or control panel connected thereto detecting motion or activity with the field of view of the camera outside of the privacy zone 400, the camera 200 or the central monitoring station or control panel connected thereto can automatically adjust or resize the privacy zone 400 to continually cover the entirety of the user U, and, when motion of the same user U that triggered the privacy zone 400 is detected after the privacy zone 400 is disabled and within the field of view of the camera, the camera 200 or the central monitoring station or control panel connected thereto can automatically extend the privacy zone 400 being enabled until the same user U is no longer detected within the field of view of the camera 200.

It is to be understood that a security camera as disclosed and described above or a central monitoring station or control panel connected thereto can include a memory device in communication with control circuitry, one or more programmable processors, and executable control software as would be understood by one of ordinary skill in the art. In some embodiments, the memory device can store an identification of predetermined gestures and the actions or time intervals for privacy zones triggered by each of the gestures. In some embodiments, the executable control software can be stored on a transitory or non-transitory computer readable medium, including, but not limited to, local computer memory, RAM, optical storage media, magnetic storage media, flash memory, and the like, and some or all of the control circuitry, the programmable processors, and the control software can execute and control at least some of the methods described above.

Although a few embodiments have been described in detail above, other modifications are possible. For example, the logic flows described above do not necessarily require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   a security camera having a field of view monitoring a region;
   the security camera detecting a first predetermined gesture made by a user within the field of view of the security camera;
   responsive to detecting the first predetermined gesture made by the user within the field of view of the security camera, enabling a dynamic privacy zone within the field of view of the security camera for a predetermined period of time.
2. The method of 1 further comprising the first predetermined gesture triggering the predetermined period of time.
3. The method of 1 further comprising:
   the security camera detecting a second predetermined gesture made by the user within the field of view of the security camera; and
   responsive to detecting the second predetermined gesture made by the user within the field of view of the security camera, disabling the dynamic privacy zone within the field of view of the security camera.
4. The method of 1 further comprising:
   responsive to failing to detect motion by the user within the field of view of the security camera prior to expiration of the predetermined time period, disabling the dynamic privacy zone within the field of view of the security camera prior to the expiration of the predetermined period of time; or
   disabling the dynamic privacy zone within the field of view of the security camera after expiration of the predetermined period of time and without user input.
5. The method of 1 wherein the security camera uses motion detection to detect the first predetermined gesture made by the user within the field of view of the security camera.
6. The method of 1 wherein the first predetermined gesture includes a voice command or a manual user input made by the user within the field of view of the security camera.
7. The method of 1 further comprising:
   the security camera detecting the first predetermined gesture made by an unauthorized person within the field of view of the security camera; and
   responsive to detecting the first predetermined gesture made by the unauthorized person with the field of view of the security camera, refraining from enabling the dynamic privacy zone within the field of view of the security camera.
8. The method of 1 further comprising:
   initially enabling the dynamic privacy zone within a center of the field of view of the security camera; and
   moving or adjusting the dynamic privacy zone within the field of view of the security camera responsive to motion detected within the field of view of the security camera outside of the dynamic privacy zone.
9. The method of 1 further comprising:
   detecting motion by the user within the field of view of the security camera after expiration of the predetermined period of time; and
   enabling the dynamic privacy zone within the field of view of the security camera until the motion by the user is no longer detected within the field of view of the security camera.
10. The method of 1 further comprising enabling the dynamic privacy zone to cover the user within the field of view of the security camera.
11. The method of 1 further comprising:
   executing face or voice recognition processing on a detected image of the user or a detected voice command said by the user;
   responsive to recognizing the face or the voice of the user, enabling the dynamic privacy zone within the field of view of the security camera for the predetermined period of time.
12. A system comprising:
   a security camera with a field of view for monitoring a region;
   a programmable processor; and
   executable control software stored on a non-transitory computer readable medium,
   wherein the programmable processor and the executable control software detect a first predetermined gesture made by a user within the field of view of the security camera, and
   wherein, responsive to detecting the first predetermined gesture made by the user within the field of view of the security camera, the programmable processor and the executable control software enable a dynamic privacy zone within the field of view of the security camera for a predetermined period of time.
13. The system of 12 wherein the programmable processor and the executable control software identify the predetermined period of time based on the first predetermined gesture.
14. The system of 12 wherein the programmable processor and the executable control software detect a second predetermined gesture made by the user within the field of view of the security camera, and wherein, responsive to detecting the second predetermined gesture made by the user within the field of view of the security camera, the programmable processor and the executable control software disable the dynamic privacy zone within the field of view of the security camera.
15. The system of 12 wherein, responsive to failing to detect motion by the user within the field of view of the security camera prior to expiration of the predetermined time period, the programmable processor and the executable control software disable the dynamic privacy zone within the field of view of the security camera prior to the expiration of the predetermined time period, or wherein the programmable processor and the executable control software disable the dynamic privacy zone within the field of view of the security camera after expiration of the predetermined period of time and without user input.
16. The system of 12 wherein the programmable processor and the executable control software use motion detection to detect the first predetermined gesture made by the user within the field of view of the security camera.
17. The system of 12 wherein the first predetermined gesture includes a voice command or a manual user input made by the user within the field of view of the security camera.
18. The system of 12 wherein the programmable processor and the executable control software detect the first predetermined gesture made by an unauthorized person within the field of view of the security camera, and wherein, responsive to detecting the first predetermined gesture made by the unauthorized person within the field of view of the security camera, the programmable processor and the executable control software refrain from enabling the dynamic privacy zone within the field of view of the security camera.
19. The system of 12 wherein the programmable processor and the executable control software initially enable the dynamic privacy zone within a center of the field of view of the security camera, and wherein the programmable processor and the executable control software move or adjust the dynamic privacy zone within the field of view of the security camera responsive to motion detected within the field of view of the security camera outside of the dynamic privacy zone.
20. The system of 12 wherein the programmable processor and the executable control software detect motion by the user within the field of view of the security camera after expiration of the predetermined period of time, and wherein the programmable processor and the executable control software enable the dynamic privacy zone within the field of view of the security camera until the motion by the user is no longer detected within the field of view of the security camera.
21. The system of 12 wherein the programmable processor and the executable control software enable the dynamic privacy zone to cover the user within the field of view of the security camera.
22. The system of 12 wherein the programmable processor and the executable control software execute face or voice recognition processing on a detected image of the user or a detected voice command said by the user, and wherein, responsive to recognizing the face or the voice of the user, enabling the dynamic privacy zone within the field of view of the security camera for the predetermined period of time.

## Claims

1. A method comprising:
a security camera having a field of view monitoring a region;
the security camera detecting a first predetermined gesture made by a user within the field of view of the security camera;
responsive to detecting the first predetermined gesture made by the user within the field of view of the security camera, enabling a dynamic privacy zone within the field of view of the security camera for a predetermined period of time.

2. The method of claim 1 further comprising the first predetermined gesture triggering the predetermined period of time.

3. The method of claim 1 further comprising:
the security camera detecting a second predetermined gesture made by the user within the field of view of the security camera; and
responsive to detecting the second predetermined gesture made by the user within the field of view of the security camera, disabling the dynamic privacy zone within the field of view of the security camera.

4. The method of claim 1 further comprising:
responsive to failing to detect motion by the user within the field of view of the security camera prior to expiration of the predetermined time period, disabling the dynamic privacy zone within the field of view of the security camera prior to the expiration of the predetermined period of time; or
disabling the dynamic privacy zone within the field of view of the security camera after expiration of the predetermined period of time and without user input.

5. The method of claim 1 wherein the security camera uses motion detection to detect the first predetermined gesture made by the user within the field of view of the security camera.

6. The method of claim 1 wherein the first predetermined gesture includes a voice command or a manual user input made by the user within the field of view of the security camera.

7. The method of claim 1 further comprising:
the security camera detecting the first predetermined gesture made by an unauthorized person within the field of view of the security camera; and
responsive to detecting the first predetermined gesture made by the unauthorized person with the field of view of the security camera, refraining from enabling the dynamic privacy zone within the field of view of the security camera.

8. The method of claim 1 further comprising:
initially enabling the dynamic privacy zone within a center of the field of view of the security camera; and
moving or adjusting the dynamic privacy zone within the field of view of the security camera responsive to motion detected within the field of view of the security camera outside of the dynamic privacy zone.

9. The method of claim 1 further comprising:
detecting motion by the user within the field of view of the security camera after expiration of the predetermined period of time; and
enabling the dynamic privacy zone within the field of view of the security camera until the motion by the user is no longer detected within the field of view of the security camera.

10. The method of claim 1 further comprising enabling the dynamic privacy zone to cover the user within the field of view of the security camera.

11. The method of claim 1 further comprising:
executing face or voice recognition processing on a detected image of the user or a detected voice command said by the user;
responsive to recognizing the face or the voice of the user, enabling the dynamic privacy zone within the field of view of the security camera for the predetermined period of time.

12. A system comprising:
a security camera with a field of view for monitoring a region;
a programmable processor; and
executable control software stored on a non-transitory computer readable medium,
wherein the programmable processor and the executable control software detect a first predetermined gesture made by a user within the field of view of the security camera, and
wherein, responsive to detecting the first predetermined gesture made by the user within the field of view of the security camera, the programmable processor and the executable control software enable a dynamic privacy zone within the field of view of the security camera for a predetermined period of time.

13. The system of claim 12 wherein the programmable processor and the executable control software identify the predetermined period of time based on the first predetermined gesture.

14. The system of claim 12 wherein the programmable processor and the executable control software detect a second predetermined gesture made by the user within the field of view of the security camera, and wherein, responsive to detecting the second predetermined gesture made by the user within the field of view of the security camera, the programmable processor and the executable control software disable the dynamic privacy zone within the field of view of the security camera.

15. The system of claim 12 wherein, responsive to failing to detect motion by the user within the field of view of the security camera prior to expiration of the predetermined time period, the programmable processor and the executable control software disable the dynamic privacy zone within the field of view of the security camera prior to the expiration of the predetermined time period, or wherein the programmable processor and the executable control software disable the dynamic privacy zone within the field of view of the security camera after expiration of the predetermined period of time and without user input.
